# FASCICULE DE BREVET EUROPEEN

(11) **EP 1 686 682 B1**
(45) Date de publication et mention de la délivrance du brevet: **25.03.2009**
(21) Numéro de dépôt: 06100797.7
(22) Date de dépôt: 24.01.2006
(51) Int. Cl.: H02P 1/30

(54) **Procédé et système de limitation du courant en sortie d'un variateur de vitesse fonctionnant selon une loi de commande U/F.**
Verfahren und System zur Begrenzung des Ausgangsstroms für einen V/f Umrichter
Method and system for limiting the current output by a speed controller operating according to a U/F control law.

(30) Priorité: 27.01.2005 FR 0550238
(43) Date de publication de la demande: 02.08.2006
(73) Titulaire: Schneider Toshiba Inverter Europe SAS, 27120 Pacy sur Eure (FR)
(72) Inventeur: Nguyen Phuoc, Vinh Tung, 92100, Boulogne Billancourt (FR); Jadot, Fabrice, 27120, Pacy Sur Eure (FR)
(74) Mandataire: Bié, Nicolas

(56) Documents cités:
- EP-A- 1 229 637
- DE-A1- 2 931 878
- DE-A1- 3 820 125

## Description

La présente invention se rapporte à un procédé de limitation du courant mis en oeuvre dans un variateur de vitesse pour moteur électrique asynchrone triphasé fonctionnant selon une loi de commande de type U/F. La présente invention concerne également un système de limitation du courant pouvant mettre en oeuvre un tel procédé.

Un variateur de vitesse classique pour moteur asynchrone comporte notamment un onduleur de tension, par exemple de type MLI (Modulation de Largeur d'Impulsions), associé à un redresseur non contrôlé et à un filtre capacitif.

Il est connu qu'un variateur de vitesse associé à un moteur asynchrone a tendance à fournir plus de courant au moteur lorsque le moteur est soumis à une surcharge. Cependant, dans une telle situation, les composants de puissance de l'onduleur du variateur peuvent être trop sollicités et leur durée de vie peut en être affectée. Il est donc nécessaire de limiter le courant délivré au moteur pour éviter d'endommager ces composants de puissance. Pour cela, dans un variateur de vitesse classique fonctionnant selon une loi de commande en tension, par exemple de type vectorielle, on utilise un régulateur de vitesse associé à une boucle de vitesse et un régulateur de courant associé à une boucle de courant.

Or dans un variateur de vitesse fonctionnant selon une loi de commande en tension de type U/F pure, aucune boucle de courant ou de vitesse n'est tolérée. Un tel variateur de vitesse est certes moins performant mais s'avère beaucoup plus robuste et pourra notamment être utilisé dans des produits tels que des transformateurs ou des ventilateurs.

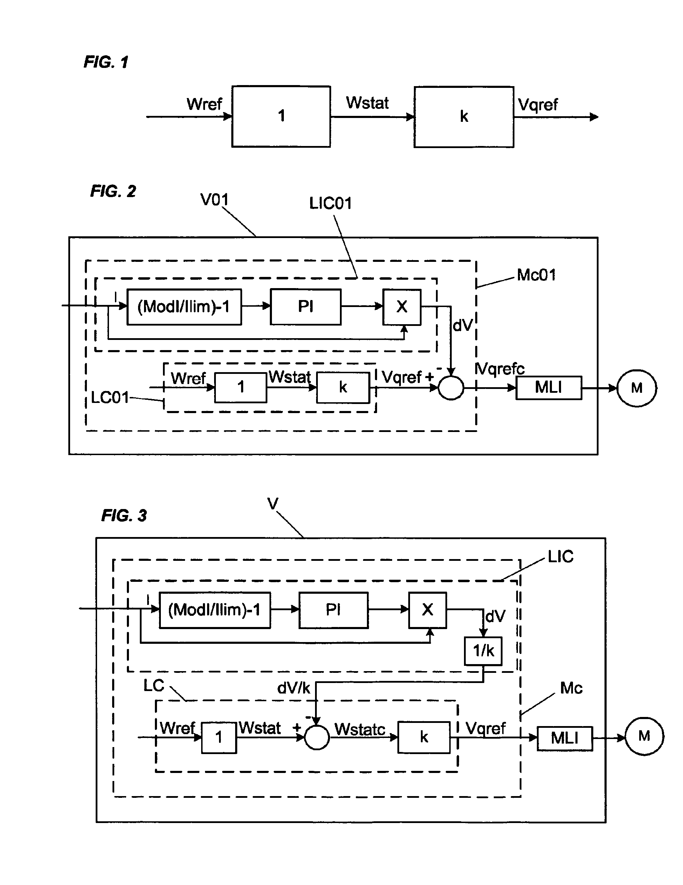

Il est connu par la demande de brevet EP 1 229 637 (brevet correspondant US 6,680,599) un système de limitation du courant en sortie d'un variateur de vitesse pour moteur asynchrone. Un tel système est utilisé pour limiter le courant en cas de surcharge dans un variateur fonctionnant selon une loi de commande en tension quelconque. En référence à la figure 2 annexée, un tel système de l'art antérieur fonctionne de la manière suivante :

Un circuit à microcontrôleur Mc01 reçoit périodiquement les signaux de courants fournis par des capteurs dans les phases du moteur M. Ces signaux de courant sont ensuite traités par un circuit de limitation de courant mettant en oeuvre une fonction de limitation de courant LIC01. La fonction de limitation du courant LIC01 détermine d'abord le module du vecteur des courants de phase Modl du moteur M, désigné ci-après module du vecteur courant. Elle compare ensuite ce module Modl avec une valeur limite de courant Ilim mémorisée dans le variateur V01 et calcule l'erreur de limitation. A partir de cette erreur de limitation, la fonction de limitation LIC01 calcule, à l'aide d'un régulateur à action intégrale PI, une variable de commande. La fonction de limitation LIC01 multiplie ensuite cette variable de commande avec les courants de phase mesurés de manière à obtenir une tension de correction dV pour chaque phase. Cette tension de correction dV est ensuite retranchée à la tension Vqref calculée selon la loi de commande LC01 utilisée pour le fonctionnement du moteur M afin d'obtenir une tension de référence Vqrefc corrigée. Ainsi, en sortie du variateur de vitesse V01, une tension de référence Vqrefc, corrigée grâce à la fonction de limitation LIC01, est appliquée au moteur M via un onduleur MLI.

Comme représenté en figure 2, lorsque la loi de commande en tension LC01 utilisée par le variateur de vitesse est de type U/F, c'est-à-dire sans boucle de courant ni boucle de vitesse, la tension Vqref obtenue selon la loi de commande en tension du moteur est proportionnelle à la fréquence du stator Wstat suivant une constante déterminée k de sorte que Vqref = k*Wstat et la fréquence du stator Wstat est égale à la référence de fréquence Wref définie en entrée du variateur de vitesse. La constante k représente le flux magnétique créé par le courant magnétisant circulant dans le stator. Lorsqu'une fonction de limitation LIC01 telle que celle décrite ci-dessus est mise en oeuvre pour limiter le courant en cas de surcharge dans un variateur de vitesse fonctionnant selon une loi de commande en tension de type U/F, elle fournit une tension de correction dV de sorte que la tension de référence corrigée Vqrefc calculée, égale à la tension appliquée aux bornes du stator, est égale à k*Wstat-dV. Ainsi cette tension corrigée Vqrefc assure la limitation précise du courant délivré au moteur M.

Néanmoins, dans ce cas, la tension égale à Vqrefc qui est appliquée aux bornes du stator diminue mais la fréquence du stator Wstat reste identique. Ainsi le couple que peut fournir le moteur, qui est sensiblement proportionnel au rapport U/F, c'est-à-dire à Vqrefc/Wstat, diminue également. Le couple du moteur pendant la limitation de courant est ainsi inférieur au couple en régime normal. Lors d'une limitation de courant effectuée à l'aide dune fonction de limitation LIC01 décrite dans la demande EP 1 229 637, les performances d'un moteur fonctionnant selon une loi de commande en tension de type U/F sont amoindries et le moteur peut même caler.

Le but de l'invention est donc de proposer, dans un variateur de vitesse fonctionnant selon une loi de commande de type U/F, un procédé et un système permettant de limiter le courant en cas de surcharge tout en maintenant les performances du moteur.

Ce but est atteint par un procédé de limitation du courant en sortie d'un variateur de vitesse par exemple pour moteur électrique asynchrone triphasé, ledit variateur comprenant un onduleur de type MLI dont les interrupteurs électroniques sont pilotés par un circuit à microcontrôleur et fonctionnant selon une loi de commande de type U/F selon laquelle la tension appliquée aux bornes du stator est proportionnelle à la fréquence du stator suivant une constante déterminée, ledit procédé étant caractérisé en ce qu'il consiste à :
- Comparer le module du vecteur des courants de phase du moteur mesurés avec une valeur limite de manière à obtenir une erreur de limitation,
- Si le module du vecteur des courants de phase est supérieur à la valeur limite, calculer une tension de correction en fonction de ladite erreur de limitation,
- Calculer le produit de la tension de correction avec l'inverse de ladite constante déterminée,
- Soustraire le produit ainsi calculé à la fréquence du stator de manière à obtenir une fréquence du stator corrigée,
- Selon la loi de commande en tension de type U/F, calculer le produit de la fréquence du stator corrigée avec ladite constante déterminée pour obtenir la tension de commande appliquée aux bornes du stator.

Selon l'invention, on applique une correction directement sur la fréquence du stator obtenue et non comme dans l'art antérieur sur la tension calculée selon la loi de commande. Ainsi, selon une loi de commande de type U/F, la tension aux bornes du stator étant proportionnelle à la fréquence du stator, on obtient à la fois une diminution de la fréquence du stator et une diminution de la tension. La limitation du courant s'accompagne donc également du maintien du couple du moteur.

Selon une particularité, l'étape de calcul de la tension de correction consiste à calculer à l'aide d'un régulateur à action proportionnelle et intégrale une variable de commande et à multiplier cette variable de commande par les courants de phase du moteur.

Selon une autre particularité, lorsque le module du vecteur des courants de phase est inférieur à la valeur limite, l'erreur de limitation calculée est appliquée au régulateur à action proportionnelle et intégrale dont la sortie est écrêtée à zéro.

Le but de l'invention est également atteint par un système de limitation du courant en sortie d'un variateur de vitesse pour moteur électrique asynchrone triphasé, ledit variateur comprenant un onduleur de type MLI dont les interrupteurs électroniques sont pilotés par un circuit à microcontrôleur fonctionnant selon une loi de commande en tension de type U/F pure dans laquelle la tension appliquée aux bornes du stator du moteur est proportionnelle à la fréquence du stator suivant une constante déterminée et dans laquelle la fréquence de référence du stator imposée en entrée est égale à la fréquence du stator, ledit circuit à microcontrôleur comportant des moyens pour calculer, à partir des mesures des courants de phase du moteur, le module du vecteur de ces courants de phase, pour comparer ledit module avec une valeur limite afin d'obtenir une erreur de limitation et pour calculer, en fonction de cette erreur de limitation, une tension de correction, ledit système étant caractérisé en ce qu'il comporte également des moyens pour calculer, lorsque le module du vecteur des courants de phase est supérieur à ladite valeur limite, une valeur de correction à la fréquence du stator en multipliant ladite tension de correction par l'inverse de ladite constante déterminée, pour appliquer cette valeur de correction à la fréquence du stator dans la loi de commande en tension de type U/F de manière à obtenir une fréquence du stator corrigée, et pour calculer le produit de la fréquence du stator corrigée avec ladite constante déterminée afin d'obtenir la tension de commande appliquée au moteur.

Selon l'invention, dans une loi de commande de type U/F, la constante déterminée représente le flux magnétique créé par le courant magnétisant circulant dans le stator du moteur. Cette valeur est calculée préalablement en faisant le quotient de la tension nominale du moteur sur la fréquence nominale du moteur et elle est mémorisée dans le variateur de vitesse.

Selon une particularité, le système de limitation du courant comporte un régulateur à action proportionnelle et intégrale apte à calculer une variable de commande et à multiplier cette variable de commande par les courants de phase du moteur afin d'obtenir la tension de correction.

D'autres caractéristiques et avantages vont apparaître dans la description détaillée qui suit en se référant à un mode de réalisation donné à titre d'exemple et représenté par les dessins annexés sur lesquels :
- La figure 1 illustre, à partir d'un schéma fonctionnel, le fonctionnement d'une loi de commande de type U/F pure.
- La figure 2 représente, à partir d'un diagramme fonctionnel, une partie d'un variateur de vitesse pour moteur asynchrone équipée d'un système de limitation du courant selon l'art antérieur.
- La figure 3 représente, à partir d'un diagramme fonctionnel, une partie d'un variateur de vitesse pour moteur asynchrone équipée d'un système de limitation du courant selon l'invention.

La figure 2 qui illustre le fonctionnement d'un système de limitation du courant selon l'art antérieur a été décrite précédemment.

La figure 1 représente, à partir d'un schéma fonctionnel, le principe de fonctionnement d'une loi de commande en tension de type U/F pure pouvant être utilisée dans un variateur de vitesse pour commander un moteur asynchrone. Selon cette loi de commande, aucune boucle de courant n'est utilisée. Ainsi, selon cette loi de commande, la fréquence de référence Wref imposée en entrée d'un variateur de vitesse est toujours égale à la fréquence du stator Wstat et correspond directement à une tension de référence Vqref qui sera appliquée via un onduleur à un moteur asynchrone. Cette tension Vqref est directement proportionnelle à la fréquence du stator de sorte que Vqref = k*Wstat.

Ainsi, comme on peut le voir sur la figure 1, à l'inverse des variateurs de vitesse classiques dans lesquels il est possible de limiter les courants en cas de surcharge en utilisant des boucles de courant et de vitesse, dans une loi de commande en tension de type U/F, aucune boucle n'est utilisée.

En se référant à la figure 3, un variateur de vitesse V pour moteur asynchrone M triphasé comprend notamment un onduleur de tension usuel commandé en Modulation de Largeur d'Impulsions dit onduleur MLI. Un tel onduleur MLI délivre au moteur M une suite d'impulsions d'amplitude fixe, positive ou négative et modulées en largeur, selon une loi de commande en tension. Les interrupteurs électroniques de l'onduleur sont pilotés par un circuit de contrôle comportant notamment un microcontrôleur Mc.

Le microcontrôleur Mc reçoit périodiquement les signaux de courant I fournis pas des capteurs dans les phases du moteur. Ces courants sont traités par un circuit de limitation de courant mettant en oeuvre une fonction de limitation du courant LIC (figure 3).

Selon l'invention, une fonction de limitation du courant LIC détermine tout d'abord le module du vecteur courant Modl, en calculant la racine carrée de la somme des carrés de chaque courant de phase. Ensuite, comme représenté en figure 3, la fonction de limitation LIC compare le module du vecteur courant Modl avec une valeur limite Ilim mémorisée dans le variateur de vitesse V. Cette valeur limite Ilim correspond à la valeur de courant à ne pas dépasser en cas de surcharge. Cette comparaison est réalisée en retranchant la valeur 1 au quotient entre le module du vecteur courant Modl et la valeur limite Ilim.

Ainsi si le module du vecteur courant Modl est inférieur à Ilim, le calcul renvoie un résultat négatif. Ce résultat est appliqué à un régulateur à action proportionnelle et intégrale PI dont la sortie négative est écrêtée à zéro. Ainsi si le module du vecteur courant Modl est inférieur à la valeur limite Ilim, rien ne vient perturber la mise en oeuvre de la loi de commande LC de type U/F.

Si le module du vecteur courant Modl est supérieur à Ilim, le calcul renvoie un résultat positif. Dans ce cas, le régulateur à action proportionnelle et intégrale PI calcule une variable de commande. La fonction de limitation LIC multiplie ensuite cette variable de commande avec les courants de phase de manière à délivrer une tension de correction dV pour chaque phase.

Selon l'invention, la fonction de limitation LIC multiplie ensuite cette tension de correction dV à l'inverse d'une constante dénommée k. Cette constante k correspond au flux magnétique nominal créé par le courant magnétisant circulant dans le stator du moteur. Elle est égale au quotient entre la tension nominale du moteur et la fréquence nominale du moteur et est mémorisée dans le variateur de vitesse V.

Selon la loi de commande en tension LC de type U/F, la fréquence de référence Wref imposée en entrée du variateur V est égale à la fréquence du stator Wstat. La correction dV/k calculée à l'aide de la fonction de limitation de courant LIC est ensuite appliquée directement à la fréquence du stator Wstat dans la loi de commande en tension LC de manière à obtenir une fréquence du stator corrigée Wstatc égale à Wstat - dV/k. Selon la loi de commande en tension LC de type U/F, on calcule ensuite la tension Vqref. Par définition cette tension est égale au produit de la fréquence du stator et de la constante k. Ici, la fréquence du stator correspond à la fréquence du stator corrigée Wstatc. Cette tension Vqref est donc égale à k*Wstatc soit à k*(Wstat - dV/k). En sortie du variateur de vitesse une tension égale à la tension Vqref calculée est appliquée aux bornes du stator du moteur M.

Ainsi, selon l'invention, dans une loi de commande de type U/F, en appliquant la correction directement sur la fréquence du stator Wstat, on obtient à la fois une limitation du courant car la tension Vqref est toujours égale à k*Wstat - dV et le maintien du couple du moteur M car la fréquence du stator est diminuée. La loi de commande U/F est donc parfaitement respectée.

Il est bien entendu que l'on peut, sans sortir du cadre de l'invention, imaginer d'autres variantes et perfectionnements de détail et de même envisager l'emploi de moyens équivalents.

## Revendications

1. Procédé de limitation du courant en sortie d'un variateur de vitesse (V) pour moteur électrique (M), ledit variateur (V) comprenant un onduleur de type Modulation de Largeur d'Impulsions MLI dont les interrupteurs électroniques sont pilotés par un circuit à microcontrôleur (Mc) et fonctionnant selon une loi de commande (LC) de type U/F selon laquelle la tension (Vqref) appliquée aux bornes du stator est proportionnelle à la fréquence du stator (Wstat) suivant une constante (k) déterminée, ledit procédé qui consiste à :
- Comparer le module du vecteur des courants de phase (Modl) du moteur (M) mesurés avec une valeur limite (llim) de manière à obtenir une erreur de limitation,
- Si le module du vecteur des courants de phase (Modl) est supérieur à la valeur limite (llim), calculer une tension de correction (dV) en fonction de ladite erreur de limitation,
étant **caractérisé en ce qu'**il consiste à :
- Calculer le produit de la tension de correction (dV) avec l'inverse de ladite constante (k) déterminée,
- Soustraire le produit ainsi calculé à la fréquence du stator (Wstat) de manière à obtenir une fréquence du stator corrigée (Wstatc),
- Selon la loi de commande en tension (LC) de type U/F, calculer le produit de la fréquence du stator corrigée (Wstatc) avec ladite constante (k) déterminée pour obtenir la tension (Vqref) de commande appliquée au moteur (M).

2. Procédé selon la revendication 1, **caractérisé en ce que** l'étape de calcul de la tension de correction (dV) consiste à calculer à l'aide d'un régulateur à action proportionnelle et intégrale (Pl) une variable de commande et à multiplier cette variable de commande par les courants de phase du moteur (M).

3. Procédé selon la revendication 2, **caractérisé en ce que** lorsque le module du vecteur des courants de phase (Modl) est inférieur à la valeur limite (llim), l'erreur de limitation calculée est appliquée au régulateur à action proportionnelle et intégrale (Pl) dont la sortie est écrêtée à zéro.

4. Système de limitation du courant en sortie d'un variateur de vitesse pour moteur (M) électrique asynchrone triphasé, ledit variateur (V) comprenant un onduleur de type MLI dont les interrupteurs électroniques sont pilotés par un circuit à microcontrôleur (Mc) fonctionnant selon une loi de commande en tension (LC) de type U/F pure dans laquelle la tension (Vqref) appliquée aux bornes du stator du moteur est proportionnelle à la fréquence du stator (Wstat) suivant une constante (k) déterminée, ledit système comporte des moyens de limitation de courant (LIC) pour :
- Comparer, à partir des mesures des courants de phase du moteur (M), le module du vecteur de ces courants de phase (Modl) avec une valeur limite (llim) afin d'obtenir une erreur de limitation,
- calculer, en fonction de cette erreur de limitation, une tension de correction (dV),
étant **caractérisé en ce qu'**il comporte des moyens pour :
- calculer, lorsque le module du vecteur des courants de phase (Modl) est supérieur à ladite valeur limite (llim), une valeur de correction à la fréquence du stator (Wstat) en multipliant ladite tension de correction (dV) par l'inverse de ladite constante (k) déterminée,
- appliquer cette valeur de correction à la fréquence du stator (Wstat) dans la loi de commande en tension (LC) de type U/F de manière à obtenir une fréquence du stator corrigée (Wstatc),
- calculer le produit de la fréquence du stator corrigée (Wstatc) avec ladite constante (k) déterminée afin d'obtenir la tension (Vqref) de commande appliquée au moteur (M).

5. Système selon la revendication 4, **caractérisé en ce qu'**il comporte un régulateur à action proportionnelle et intégrale (PI) apte à calculer une variable de commande et à multiplier cette variable de commande par les courants de phase du moteur afin d'obtenir la tension de correction (dV).

## Claims

1. Method for limiting the current output by a speed controller (V) for electric motor (M), said controller (V) comprising an inverter of PWM (Pulse Width Modulation) type whose electronic switches are commanded by a microcontroller circuit (Mc) and operating according to a control law (LC) of U/F type according to which the voltage (Vqref) applied to the terminals of the stator is proportional to the frequency of the stator (Wstat) in accordance with a determined constant (k), said method that consists in :
- comparing the modulus of the vector of the measured phase currents (ModI) of the motor (M) with a limit value (Ilim) so as to obtain a limitation error,
- if the modulus of the vector of the phase currents (ModI) is greater than the limit value (Ilim), calculating a correction voltage (dV) as a function of said limitation error,
being **characterized in that** it consists in
- calculating the product of the correction voltage (dV) with the inverse of said determined constant (k),
- subtracting the product thus calculated from the frequency of the stator (Wstat) so as to obtain a corrected frequency of the stator (Wstatc),
- according to the voltage control law (LC) of U/F type, calculating the product of the corrected frequency of the stator (Wstatc) with said determined constant (k) to obtain the control voltage (Vqref) applied to the motor (M).

2. Method according to Claim 1, **characterized in that** the step of calculating the correction voltage (dV) consists in calculating with the aid of a proportional and integral action regulator (PI) a control variable and in multiplying this control variable by the phase currents of the motor (M).

3. Method according to Claim 2, **characterized in that** when the modulus of the vector of the phase currents (ModI) is less than the limit value (Ilim), the calculated limitation error is applied to the proportional and integral action regulator (PI) whose output is clipped to zero.

4. System for limiting the current output by a speed controller for three-phase asynchronous electric motor (M), said controller (V) comprising an inverter of PWM type whose electronic switches are commanded by a microcontroller circuit (Mc) operating according to a voltage control law (LC) of pure U/F type in which the voltage (Vqref) applied to the terminals of the stator of the motor is proportional to the frequency of the stator (Wstat) in accordance with a determined constant (k), said system comprises means of limiting the current (LIC) for:
- comparing, on the basis of the measurements of the phase currents of the motor (M), the modulus of the vector of these phase currents (ModI) with a limit value (Ilim) so as to obtain a limitation error,
- calculating, as a function of this limitation error, a correction voltage (dV),
being **characterized in that** it comprises means for
- calculating, when the modulus of the vector of the phase currents (ModI) is greater than said limit value (Ilim), a correction value for the frequency of the stator (Wstat) by multiplying said correction voltage (dV) by the inverse of said determined constant (k),
- applying this correction value for the frequency of the stator (Wstat) in the voltage control law (LC) of U/F type so as to obtain a corrected frequency of the stator (Wstatc),
- calculating the product of the corrected frequency of the stator (Wstatc) with said determined constant (k) so as to obtain the control voltage (Vqref) applied to the motor (M) .

5. System according to Claim 4, **characterized in that** it comprises a proportional and integral action regulator (PI) able to calculate a control variable and to multiply this control variable by the phase currents of the motor so as to obtain the correction voltage (dV).

## Patentansprüche

1. Verfahren zur Begrenzung des Stroms am Ausgang eines Umrichters (V) für einen Elektromotor (M), wobei der Umrichter (V) einen Wechselrichter vom Typ Impulsbreitenmodulation MLI aufweist, dessen elektronische Schalter von einer Mikrokontroller-Schaltung (Mc) gesteuert werden, und gemäß einem Steuergesetz (LC) vom Typ U/F arbeitet, gemäß dem die an die Klemmen des Stators angelegte Spannung (Vqref) proportional zur Frequenz des Stators (Wstat) gemäß einer bestimmten Konstante (k) ist, wobei das Verfahren, das darin besteht,
- den Modul des Vektors der gemessenen Phasenströme (Modl) des Motors (M) mit einem Grenzwert (llim) zu vergleichen, um einen Begrenzungsfehler zu erhalten,
- wenn der Modul des Vektors der Phasenströme (Modl) über dem Grenzwert (llim) liegt, eine Korrekturspannung (dV) in Abhängigkeit von dem Begrenzungsfehler zu berechnen,
**dadurch gekennzeichnet ist, dass** es darin besteht:
- das Produkt aus der Korrekturspannung (dV) und dem Kehrwert der bestimmten Konstante (k) zu berechnen,
- das so berechnete Produkt von der Frequenz des Stators (Wstat) zu subtrahieren, um eine korrigierte Frequenz des Stators (Wstatc) zu erhalten,
- gemäß dem Spannungssteuergesetz (LC) vom Typ U/F das Produkt aus der korrigierten Frequenz des Stators (Wstatc) und der bestimmten Konstante (k) zu berechnen, um die Steuerspannung (Vqref) zu erhalten, die an den Motor (M) angelegt wird.

2. Verfahren nach Anspruch 1, **dadurch gekennzeichnet, dass** der Schritt der Berechnung der Korrekturspannung (dV) darin besteht, mit Hilfe eines Proportional- und Integralreglers (PI) eine Steuervariable zu berechnen und diese Steuervariable mit den Phasenströmen des Motors (M) zu multiplizieren.

3. Verfahren nach Anspruch 2, **dadurch gekennzeichnet, dass**, wenn der Modul des Vektors der Phasenströme (Modl) unter dem Grenzwert (llim) liegt, der berechnete Begrenzungsfehler an den Proportional- und Integralregler (PI) angewendet wird, dessen Ausgang auf null begrenzt ist.

4. System zur Begrenzung des Stroms am Ausgang eines Umrichters für einen elektrischen Drehstrom-Asynchronmotor (M), wobei der Umrichter (V) einen Wechselrichter vom Typ MLI aufweist, dessen elektronische Schalter von einer Mikrokontroller-Schaltung (Mc) gesteuert werden, und gemäß einem Spannungssteuergesetz (LC) vom reinen Typ U/F arbeitet, wobei die an die Klemmen des Stators des Motors angelegte Spannung (Vqref) proportional zur Frequenz des Stators (Wstat) gemäß einer bestimmten Konstante (k) ist, wobei das System, das Strombegrenzungsmittel (LIC) aufweist, um:
- ausgehend von den Messungen der Phasenströme des Motors (M) den Modul des Vektors dieser Phasenströme (Modl) mit einem Grenzwert (llim) zu vergleichen, um einen Begrenzungsfehler zu erhalten,
- in Abhängigkeit von diesem Begrenzungsfehler eine Korrekturspannung (dV) zu berechnen,
**dadurch gekennzeichnet ist, dass** es Mittel aufweist, um:
- wenn der Modul des Vektors der Phasenströme (Modl) über dem Grenzwert (llim) liegt, einen Korrekturwert der Frequenz des Stators (Wstat) zu berechnen, indem die Korrekturspannung (dV) mit dem Kehrwert der bestimmten Konstante (k) multipliziert wird,
- diesen Korrekturwert an die Frequenz des Stators (Wstat) in dem Spannungssteuergesetz (LC) vom Typ U/F anzuwenden, um eine korrigierte Frequenz des Stators (Wstatc) zu erhalten,
- das Produkt aus der korrigierten Frequenz des Stators (Wstatc) und der bestimmten Konstante (k) zu berechnen, um die an den Motor (M) angelegte Steuerspannung (Vqref) zu erhalten.

5. System nach Anspruch 4, **dadurch gekennzeichnet, dass** es einen Proportional- und Integralregler (PI) aufweist, der fähig ist, eine Steuervariable zu berechnen und diese Steuervariable mit den Phasenströmen des Motors zu multiplizieren, um die Korrekturspannung (dV) zu erhalten.
